# EUROPÄISCHE PATENTSCHRIFT

(11) **EP 3 911 825 B1**
(45) Veröffentlichungstag und Bekanntmachung des Hinweises auf die Patenterteilung: **15.03.2023**
(21) Anmeldenummer: 20700645.3
(22) Anmeldetag: 07.01.2020
(51) Int. Cl.: E05F 7/00, B60K 15/05

(54) **EINRICHTUNG ZUM ÖFFNEN UND SCHLIESSEN EINER TANK- UND/ODER LADEKLAPPE**
DEVICE FOR OPENING AND CLOSING A TANK FLAP AND/OR CHARGING FLAP
DISPOSITIF POUR OUVRIR ET POUR FERMER UN BOUCHON DE RÉSERVOIR ET/OU HAYON

(30) Priorität: 14.01.2019 DE 102019100787
(43) Veröffentlichungstag der Anmeldung: 24.11.2021
(73) Patentinhaber: Dr. Schneider Kunststoffwerke GmbH, 96317 Kronach-Neuses (DE)
(72) Erfinder: BANGE, Matthias, 75446 Wiernsheim (DE); DAHLEN, Dominik, 91245 Simmelsdorf (DE); DRÓZDZ, Maciej, 58-540 Karpacz (PL); LOCHERT, Michal, 58-506 Jelenia Góra (PL)
(86) Internationale Anmeldenummer: PCT/EP2020/050191
(87) Internationale Veröffentlichungsnummer: WO 2020/148112

(56) Entgegenhaltungen:
- EP-A2- 1 308 375
- DE-A1-102004 027 773
- DE-A1-102016 110 869
- US-A- 5 658 036

## Beschreibung

Es wird eine Einrichtung zum Öffnen und Schließen einer Tank- und/oder Ladeklappe beschrieben, die sowohl eine parallele Verlagerung als auch einen Schutz vor Regen, Schnee und dergleichen in der geöffneten Stellung bereitstellt.

### Hintergrund

Tank- oder Lademodule für Fahrzeuge dienen dazu, ein Tankeinfüllrohr oder einen Ladestecker bzw. weitere Anschlüsse für eine Betankung in einer ersten Stellung einer Klappe zu verschließen und in einer zweiten, geöffneten Stellung der Klappe freizugeben. Die Tank- oder Ladeklappen der Module schließen hierzu in der geschlossen Stellung bündig mit der Oberfläche der Karosserie ab und dichten zudem die Tank- oder Lademulde gegenüber der Umgebung über entsprechende Dichtungen an der Klappe oder am Muldenkörper ab. Der Muldenkörper ist mit dem Fahrzeug befestigt und weist eine Öffnung auf, durch welche das Einführrohr oder der Ladestecker geführt sind.

Parallel verlagerbare Klappen werden bei Fahrzeugen oft eingesetzt, wenn die Klappen in der geöffneten Stellung nicht weit von der Karosserie abstehen sollen. Zur Verlagerung sind Hebelanordnungen bekannt, die eine parallele Verlagerung bereitstellen.

Herkömmliche Klappen stehen zudem im geöffneten Zustand weit ab. Durch den vergleichsweise langen Hebel aus Klappe und Hebelarm kann es zu großen Krafteinwirkungen auf ein Tank- und/oder Lademodul und eine Karosserieteil kommen. Weiterhin ist durch das Hinzukommen eines zweiten Füllrohres (SCR oder Gas) oder bei Plug-In-Derivaten der großen Ladesteckdose, das Tank- und/oder Lademodul erheblich größer als bei konventionellen Kraftfahrzeugen. Auch im Hinblick auf das Design von Klappen sind die bekannten Ausführungen nachteilig, vor allem wenn die Tankdeckel größere Abmessungen aufweisen.

### Stand der Technik

Aus DE 20 2016 105 735 U1 ist eine Einrichtung zum Öffnen und Schließen einer Tankklappe bekannt, wobei eine Hebelanordnung vorgesehen ist, die eine parallele Verlagerung der Tankklappe beim Öffnen bereitstellt.

Die Anzahl an Fahrzeugen mit einer Ladesteckdose nimmt zu, sodass neben konventionellen Betankungssystemen mit Kraftstoffen das Aufladen einer Fahrzeugbatterie für den Antrieb von Fahrzeugen erforderlich wird. Herkömmlicherweise erfolgt das Betanken von Fahrzeugen mit Kraftstoffen bei einer Tankstelle, die ein Dach aufweist, worüber das Fahrzeug beim Betankungsvorgang vor Regen, Schnee, Hagel und dergleichen geschützt ist. Ein Beladen von Fahrzeugen mit einem Ladestecker findet häufig an Ladesäulen statt, die ohne zusätzliche Einrichtungen an Parkplätzen angeordnet sind. Beim Betanken bzw. Laden dieser Fahrzeuge ist damit kein schützendes Dach für das Fahrzeug vorgesehen. Doch gerade bei solchen Fahrzeugen ist der Kontaktbereich zwischen Ladesteckdose und Ladestecker vor Feuchtigkeit zu schützen.

Mit gewöhnlichen Tank- oder Ladeeinrichtungen mit verschwenkbaren Klappen bzw. parallel verlagerbaren Klappen ist kein ausreichender Schutz dieser Schnittstelle (Ladestecker - Ladesteckdose) möglich.

Aus JP 2016-088122 A und US 2016/0121746 A1 ist eine Ladeanordnung bekannt, die eine über eine Hebelanordnung parallel verlagerbare Klappe aufweist. Um einen zusätzlichen Schutz beim Ladevorgang vor Regen und Schnee zu bieten, kann die Klappe neben einer parallelen Verlagerung aus einer geöffneten Stellung zurück verschwenkt werden und einen zusätzlich verschwenkten Zustand einnehmen. Dabei kann eine obere Kante der Klappe derart verschwenkt werden, dass diese in Richtung der Oberfläche der Karosserie zeigt. Um dies zu erreichen sind die Hebel der Hebelanordnung zweiteilig ausgebildet und die einzelnen Teile über ein Gelenk miteinander verbunden. Die bekannte Anordnung weist den Nachteil auf, dass über die geteilte Ausführung der einzelnen Hebel die Klappe leicht verschwenkt werden kann. Vor allem bei schlechten Wetterbedingungen mit stärkerem Wind kann es zu einem Hochklappen der Klappe kommen, da diese als Segel wirkt. Zudem ist ein Übergangsbereich zwischen der oberen Kante der Klappe und dem Fahrzeug frei, sodass an der Oberfläche der Karosserie entlangströmendes Wasser in den Verbindungsbereich gelangen kann.

Aus US 2011/0140477 A1 ist eine Tankklappe bekannt, die zwei Hebel aufweist, die wiederum aus zwei Teilen bestehen. Im Verbindungsbereich der Teile ist eine Anordnung vorgesehen, welche eine relative Verlagerung der beiden Teile der Hebel zum Freigeben der Tankklappe und zum Verschwenken enthält.

Die Rotation der Hebel erfolgt über ein mit dem Gehäuse verbundenes Ende eines Teils der Hebel.

Aus DE 10 2016 110 869 A1 ist eine Verschlussvorrichtung zum Verschließen einer Zugriffsöffnung in einer Kraftfahrzeugkarosserie bekannt, wobei über die Zugriffsöffnung ein Innenraum zugänglich und die Zugriffsöffnung durch ein Deckelelement verschließbar ist, und wobei das Deckelelement mit einer im Innenraum angeordneten Führungsvorrichtung verbunden ist, über die das Deckelelement zwischen einer Schließstellung und einer Offenstellung verstellbar ist, wobei die Führungsvorrichtung derart ausgeführt ist, dass das Deckelelement während der Bewegung zwischen der Schließstellung und der Offenstellung eine Schubbewegung und eine Hubbewegung ausführt, wobei das Deckelelement in der Offenstellung im Innenraum angeordnet ist.

Die gattungsgemäße EP 1 308 375 A2 offenbart eine Klappe für ein Fahrzeug mit einer Klappenführung. Dabei soll die Montage der Klappe dadurch erleichtert werden, dass an der Karosserie des Fahrzeugs ein separater Klappenrahmen angebracht und die Klappenführung am Klappenrahmen und an der Klappe befestigt ist.

### Aufgabe

Es besteht daher die Aufgabe darin eine Einrichtung zum Öffnen und Schließen einer Tank- und/oder Ladeklappe anzugeben, die einen verbesserten Schutz vor Regen, Schnee, Hagel und dergleichen beim Laden oder Betanken eines Fahrzeugs bereitstellt. Dabei soll die Ausführung robuster als bei bekannten Ausführungen ausgebildet sein.

### Lösung

Die vorstehend genannte Aufgabe wird durch eine Einrichtung zum Öffnen und Schließen einer Tank- und/oder Ladeklappe gelöst, mindestens aufweisend eine Klappe und eine Hebelanordnung, wobei
- die Hebelanordnung mindestens zwei Hebel aufweist,
- die Hebel seitlich an der Klappe und an einer Tank- und/oder Lademulde in Öffnungsrichtung übereinander verschwenkbar angeordnet sind,
- einer der Hebel zusätzlich zur verschwenkbaren Lagerung radial zur Schwenkachse verlagerbar ist, um die Klappe in eine Dachstellung zu verbringen,
- der eine Hebel über eine Lagereinrichtung verschwenkbar an der Tank- und/oder Lademulde gelagert und die Lagereinrichtung verschwenkbar an der Tank- und/oder Lademulde gelagert ist,
- die Lagereinrichtung eine Führung für einen Abschnitt des einen Hebels aufweist, und
- zum Verbringen in die Dachstellung nur der eine Hebel in seiner Länge veränderbar ist.

Die Einrichtung weist den Vorteil auf, dass die Hebel nicht zweigeteilt werden müssen und daher die Hebel einer solchen Einrichtung steif ausgeführt sein können. Es kann daher auf zweigeteilte Hebel vollständig verzichtet werden. Dies ermöglicht ein Verschwenken und die Beibehaltung verschiedener Stellungen, ohne dass es zu einem Abknicken oder unbeabsichtigtem Zurückschwenken kommt. Die Verlagerung erfolgt durch Verschwenken mindestens eines Hebels, wodurch der andere Hebel automatisch mit verschwenkt wird. Dabei erfolgt eine parallele Verlagerung der Klappe zum Öffnen einer Tank- und/oder Lademulde. In der geöffneten Stellung wird der eine Hebel radial zu seiner Schwenkachse verlagert, wobei die Ausrichtung der Klappe von der parallelen Verschließposition verschwenkt wird. Das Verschwenken der Klappe erfolgt um die Achse, welche die Verbindungsachse des anderen Hebels mit der Klappe bildet. Das Verschwenken erfolgt dabei in der geöffneten Position. Es ist daher nicht notwendig aus einer geöffneten Position in eine Zwischenstellung zurückzukehren oder das Verschwenken der Klappe in einer Zwischenstellung zwischen einer geöffneten und einer geschlossenen Position durchzuführen. Dadurch kann die Klappe den gesamten Bereich der Lademulde von oben hin überdecken. Zudem kann die Klappe, beispielsweise über eine umlaufende Dichtung, direkt an der Karosserie des Fahrzeugs anliegen, sodass Regen, Schnee oder dergleichen seitlich an der Öffnung für die Lade - und/oder Tankmulde vorbeigeführt werden.

Die hierin beschriebene Einrichtung ermöglicht insbesondere das Verbringen der Klappe in die geöffnete Position und in die Dachstellung, wobei die Klappe zusätzlich verschwenkt ist, mit nur einem Antriebselement, das bspw. auf den längenveränderbaren Hebel wirkt. Auf den anderen Hebel kann in weiteren Ausführungen eine Federeinrichtung (z.B. einen Spiralfeder) wirken, um das Verschwenken der Klappe zu unterstützen und die korrekte Reihenfolge von "geschlossen" zu "geöffnet" nach "Dachstellung" und umgekehrt zu gewährleisten. Es erfolgen die Bewegungen nicht synchron sondern nacheinander. D.h. dass aus der geschlossenen Position erst ein Verschwenken der Klappe zum Verbringen in die geöffnete Position erfolgt und danach, bei einer weiteren Verlagerung des entsprechenden Hebels, automatisch das Verbringen in die Dachstellung erfolgt, wobei der eine Hebel in seiner Länge verändert wird. Soll die Klappe aus der Dachstellung in die geschlossene Position verbracht werden, erfolgt über den Antrieb zuerst eine Längenänderung des einen Hebels, wobei der Hebel wieder "verkürzt" wird (z.B. durch ein "Einfahren"). Dabei wird die Klappe von der Dachstellung in die geöffnete Stellung verbracht. Wird der längenveränderbare, angetriebene Hebel weiter bewegt, erfolgt ein Zurückschwenken der Klappe in die geschlossenen Stellung.

Vorteilhafterweise wird der längenveränderbare Hebel zum Verbringen in die verschiedenen Stellungen rotiert. Hierzu kann das Verbringen in die geöffnete Stellung derart durch einen Anschlag begrenzt werden, dass eine weitere Rotation der Hebelanordnung nicht mehr erfolgen kann. Die Rotation der Hebelanordnung bzw. des längenveränderbaren Hebels erfolgt über einen Antrieb. Der Antrieb kann hierzu mit einem Zahnrad gekoppelt sein. Wenn durch den Anschlag das weitere Verdrehen der Hebelanordnung verhindert wird, kann trotzdem das Zahnrad des Antriebs weiter rotiert werden. Die weitere Rotation des Zahnrads, das in einer korrespondierenden Führung des längenveränderbaren Hebels aufgenommen ist und einen Zahnstangenabschnitt aufweist, ruft eine Verlagerung eines radial zur Rotationsachse beweglichen Abschnitts des längenveränderbaren Hebels hervor. Somit sind die Bewegungen zum Verbringen in die geöffnete Position und in die Dachstellung aufeinander abgestimmt und miteinander so gekoppelt, dass erst nach einer Blockade der Rotation der Hebelanordnung die weitere Rotation eine Verlagerung des Hebels in radialer Richtung durch Längenänderung bewirkt. Hierzu wird bspw. ein Dämpfer eingesetzt, um zunächst die Rotation des Zahnrads und die daraus resultierende Verlagerung des längenveränderlichen Hebel zu unterbinden, damit stattdessen nur eine Verschwenkung der Hebelanordnung erfolgt. Erst nachdem die Hebelanordnung auf einen Anschlag stößt, wird der Dämfpungswiderstand vom Antrieb überschritten und das Zahnrad schafft es, den längenveränderlichen Hebel zu verlagern. Umgekehrt wird über das Zahnrad der entsprechende Abschnitt des längenveränderbaren Hebels über den Zahnstangenabschnitt und die Rotation des Zahnrads eingefahren, bis diese Bewegung durch einen weiteren Anschlag begrenzt wird. Dabei wird die Klappe von der Dachstellung in die geöffnete Position bzw. Stellung verbracht. Nach dem Erreichen des Anschlags bewirkt die weitere Rotation des Zahnrads durch den Antrieb ein Rotieren des längenveränderbaren Hebels und damit der gesamten Hebelanordnung, so dass die Klappe in die geschlossene Position bzw. Stellung verbringbar ist. Bei der Schließbewegung sind dabei federunterstützte andere Hebel zweckdienlich, damit der Dämpfungswiderstand nicht zuerst eine Schwenkbewegung hervorruft, sondern erst eine Verlagerungsbewegung des längenveränderlichen Hebels.

Gegenüber bekannten Ausführungen kann durch die Einrichtung mit nur einem Antrieb eine Verlagerung der Klappe mit zwei Verschiedenen Bewegungen erreicht werden. Der Aufbau der Einrichtung ist daher deutlich einfacher. Des Weiteren ist bspw. die Ansteuerung eines Elektromotors einfach durchzuführen, weil lediglich eine Rotation in die entsprechende Richtung durchgeführt werden muss, ohne auf andere Antriebselemente zu achten oder mit diesen abgestimmte Bewegungsabläufe umzusetzen.

In weiteren Ausführungen kann daher auch bspw. eine Federeinrichtung (z.B. eine Spiralfeder) auf das Zahnrad wirken, so dass ein Verbringen in die geöffnete Position und in die Dachstellung allein über gespeicherte Federkraft erreicht wird. Die Verlagerung zurück in die Ausgangsstellung, d.h. in die geschlossene Stellung, kann in einer solchen Ausführung mit einer Federeinrichtung als Antriebselement oder Bestandteil manuell erfolgen. Hierzu wird ein Druck auf die Klappe ausgeübt, sodass die Klappe zuerst in die geöffnete Position aus der Dachstellung verschwenkt wird und bei einem weiteren Druck auf die Klappe die Hebelanordnung mitsamt der Klappe verschwenkt wird, bis diese die geschlossene Position erreicht.

Die Ausbildung der Hebel ohne eine Teilung stellt gegenüber den bekannten Ausführungen eine robustere Lösung bereit. Zudem ist die erforderliche Mechanik einfacher ausgebildet, da keine Schwenkgelenke bei den einzelnen Hebeln vorgesehen sind.

Die Hebel können gekrümmt ausgebildet sein. Dadurch kann die Klappe beispielsweise eine Tank - und/oder Ladeöffnung in einer Fahrzeugwand im Wesentlichen vollständig freigeben und in der geöffneten Stellung relativ nahe an der Fahrzeugwand angeordnet sein, wobei der Verschwenkmechanismus einfach aufgebaut ist und die schwenkbaren Enden der Hebel an einem Abschnitt der Tank- und/oder Lademulde gelagert sind. Ferner ist es möglich, die Schwenkachsen der beiden Hebel fahrzeugseitig relativ nahe zueinander anzuordnen.

In weiteren Ausführungsformen können beispielsweise zwei erste Hebel und/oder zwei zweite Hebel vorgesehen sein, die mit den anderen Hebeln ein Viergelenk ausbilden. Bei einem Viergelenk müssen dann beide erste Hebel zusätzlich zur verschwenkbaren Lagerung radial zur Schwenkachse verlagerbar sein. Die beiden ersten Hebel sind hierzu in ihrer Länge veränderbar.

Die Einrichtung ermöglicht neben einem geringen Überstand der Klappe über eine Fahrzeugseitenwand in der geöffneten Stellung, wodurch ein möglicher Hebel bei Missbrauch sehr gering gehalten wird, einen zusätzlichen Schutz des Tank - und/oder Ladebereichs vor Schnee, Regen, Hagel und dergleichen.

Darüber hinaus wird über die parallele Öffnungsrichtung eine Abdichtung der Klappe direkt in der Fuge realisiert, wobei die Klappe im Bereich einer Öffnung einer Fahrzeugwand angeordnet ist. Die Hebelanordnung stellt ein Verschwenken der Klappe ohne ausladende Schwenklagerung bereit, wodurch ein erheblicher Bauraumgewinn fahrzeugseitig erreicht wird.

Einer der Hebel, vorzugsweise der zweite Hebel, kann mit einer Öffnungseinrichtung zur Unterstützung der Schwenkbewegung verbunden sein, die nach einem Freigeben der Klappe das Verschwenken der Klappe unterstützt.

Die Klappe kann in der geschlossenen Stellung über einen Push-Push-Mechanismus oder einen Zentralverriegelungssteller mit angeschlossenem Aktuator verriegelbar sein. Bei einem Push-Push-Mechanismus kann durch ein Drücken auf die Klappe ein Öffnen erfolgen. Über eine Stelleinrichtung mit Aktuator kann ein Öffnen bzw. Freigeben einer arretierten Stellung der Klappe mittels eines Mechanismus oder einer Steuertaste erfolgen. Hierzu können beispielsweise Steuer- und Signalleitungen sowie ein Seilzug für eine mechanische Ausführung vorgesehen sein.

Zusätzlich kann in den verschiedenen Ausführungen ein Sensor vorhanden sein, der eine Annäherung einer Hand und/oder eines Zapfhahns oder eines Ladesteckers erfasst und dann automatisch das Öffnen der Klappe auslöst bzw. veranlasst.

Der eine Hebel ist über eine Lagereinrichtung verschwenkbar an der Tank - und/oder Lademulde gelagert. Die Lagereinrichtung dient zum Verschwenken des Hebels und zugleich zur Verlagerung radial zur Schwenkachse. Vorzugsweise ist der Hebel in einer Lagereinrichtung radial zu seiner Schwenkachse verschiebbar gelagert, wobei das Zahnrad der Antriebseinheit in der Lagereinrichtung aufgenommen aber drehbar mit dem Antrieb verbunden ist, der nicht verlagerbar mit der Tank- und/oder Lademulde oder einem diese umgebenden Abschnitt angeordnet ist.

Dabei ist die Lagereinrichtung selbst verschwenkbar an der Tank - und/oder Lademulde gelagert. Über eine entsprechende Aufnahme, Führung oder dergleichen kann der Hebel dann radial zu seiner Schwenkachse verlagert werden. Der Hebel ist in der Lagereinrichtung derart aufgenommen, dass dieser lediglich um seine Schwenkachse und die Schwenkachse der Lagereinrichtung verschwenkt werden kann und zugleich radial verlagerbar ist. Die Verlagerung erfolgt durch Rotation des Zahnrads der Antriebseinheit.

Darüber hinaus weist die Lagereinrichtung eine Führung für einen Abschnitt des einen Hebels auf.

In weiteren Ausführungen kann die Lagereinrichtung eine Dämpfungseinrichtung aufweisen, die dazu dient, ein unbeabsichtigtes Herausgleiten des Hebels zu verhindern. Zudem kann die Dämpfungseinrichtung dazu dienen, einen radial verlagerten Zustand des Hebels aufrecht zu erhalten, ohne dass dieser selbstständig, beispielsweise durch sein Eigengewicht, zurückgedrängt wird und damit die vorteilhafte "Dach"- Stellung ungewollt wieder verlässt.

Vorzugsweise weist der Abschnitt des Hebels den Zahnstangenabschnitt auf. Die Dämpfungseinrichtung kann bspw. ein Zahnrad aufweisen. Das Zahnrad des Antriebs kann in weiteren Ausführungen auch für die Dämpfung dienen. Hierzu kann das Zahnrad verschiedenartig ausgebildet und mit der Lagereinrichtung verbunden sein. Zudem hängt die Ausbildung und Anbindung des Zahnrads an der Lagereinrichtung in diesen Ausführungen davon ab, ob ein manuelles Verschwenken der Klappe in der geöffneten Stellung oder ein automatisches Verschwenken erfolgen soll. Bei der Ausbildung als Dämpfungseinrichtung kann das Zahnrad beispielsweise aus einem nachgiebigen Material, wie beispielsweise Silikon oder TPE (Thermoplastische Elastomere) ausgebildet und fest mit der Lagereinrichtung verbunden sein. Bei einer Verlagerung des einen Hebel müssen die Zähne des Zahnstangenabschnitts des Hebels die Zähne des demgegenüber weicheren Zahnrads niederdrücken. Hierzu ist eine Kraft erforderlich, die von der Ausbildung und Wahl der Komponenten abhängt. In weiteren Ausführungsformen kann das Zahnrad über eine Welle, die durch die Schwenkachse der Lagereinrichtung verläuft, zusätzlich gelagert sein und über eine weitere Dämpfungseinrichtung einer Rotation entgegenwirken. Dabei kann das Zahnrad fest ausgebildet sein, sodass bei einer Verlagerung des Hebels zwar eine Rotation des Zahnrads auftritt, die Rotation über die weitere Dämpfungseinrichtung, die außerhalb der Tank- und/oder Lademulde gelagert oder in dieser aufgenommen ist, beschränkt wird.

Die Lagereinrichtung kann in noch weiteren Ausführungen mit der Antriebseinheit gekoppelt sein, die eine automatische Verlagerung des Abschnitts des Hebels und damit des gesamten Hebels zum Verschwenken der Klappe in der geöffneten Stellung hervorruft.

In diesen Ausführungen kann die Lagereinrichtung eine Führung für einen Abschnitt des einen Hebels und ein Antriebsritzel (Zahnrad) aufweisen, das mit dem Zahnstangenabschnitt in Eingriff steht und mit der Antriebseinheit gekoppelt ist. Das Antriebsritzel kann dabei das Zahnrad sein, wie es für die vorstehend beschriebene manuelle oder motorische Bedienung der Klappe vorgesehen ist.

Das Zahnrad selbst oder das Antriebsritzel sind jedoch nicht direkt mit der Lagereinrichtung verbunden, sodass das Antriebsritzel unabhängig von der Lagereinrichtung verdreht werden kann. Nach dem Verbringen der Klappe in die geöffnete Stellung kann eine Rotation des Antriebsritzels erfolgen, welches über den Zahnstangenabschnitt den Hebel antreibt und damit eine radiale Verlagerung relativ zur Schwenkachse bewirkt. Hierüber wird die Klappe verschwenkt und der Tank- und/oder Ladebereich vor Regen und Schnee geschützt.

Der oder die erste(n) bzw. längenveränderbare(n) Hebel kann bzw. können über eine Federeinrichtung und/oder über einen elektrisch ansteuerbaren Antrieb verschwenkbar sein. Der Hebel ist an einem Ende mit der Tankklappe verschwenkbar verbunden und an dem anderen Ende mit der Lagereinrichtung verbunden. Der oder die zweiten nicht verlagerbaren Hebel sind an einem Ende verschwenkbar mit der Klappe und am anderen Ende an einem Fahrzeugteil verschwenkbar gelagert.

Das elektrische Verschwenken der Hebelanordnung durch einen auf den ersten bzw. längenveränderbaren Hebel wirkenden Antrieb ermöglicht Ausführungen, wobei der Bediener die Klappe zum Öffnen und Schließen nicht berühren muss. Es kann aber auch eine Federeinrichtung vorgesehen sein, über welche die Klappe verschwenkbar ist. Entweder ist die Klappe manuell verschwenkbar und kann von einer Person nach einer Entriegelung verschwenkt werden, oder die Klappe wird beispielsweise elektrisch geöffnet oder geschlossen, wobei die Federeinrichtung Teil eines Notfallöffnungsmechanismus sein kann. Ein solcher Notfallöffnungsmechanismus kann auch ein Schließen bereitstellen. Die Federeinrichtung hilft beim Öffnen der Klappe, wobei die Klappe im geschlossenen Zustand über beispielsweise einen Haken einer Stelleinrichtung verriegelt wird, der wiederum über einen Schlüssel oder über einen Seilzug in seine Entriegelungsstellung verbracht werden kann.

Zur Unterstützung beim Verschwenken kann das Ende eines zweiten Hebels, welches fahrzeugseitig abseits der Klappe angeordnet ist, beispielsweise mit einer Spiralfeder oder Schenkelfeder verbunden sein. Die Feder ist einerseits mit dem Fahrzeug bzw. der Tank- und/oder Lademulde verbunden und das andere Ende der Feder ist in einem Schlitz einer Lagerachse oder anderweitig fest an dem Hebel angebunden, sodass nach dem Freigeben einer Verriegelung die Feder eine Rotation des zweiten Hebels veranlasst. Das Verschwenken der Klappe zum Verbringen der Klappe in eine Dachstellung zum Schutz vor Regen oder Schnee erfolgt automatisch, wobei hierzu nach dem Verbringen der Klappe in die Öffnungsstellung die Klappe weiter verlagert wird, bis die gewünschte Stellung (Dachstellung) erreicht ist. Eine zusätzliche Dämpfungseinrichtung in der Lagereinrichtung kann dafür Sorge tragen, dass die jeweils ausgewählte Stellung beibehalten wird und eine festlegbare Mindestkraft zum Verschwenken erforderlich ist.

Bei einem elektrischen Verschwenken kann das abseits der Klappe gelagerte Ende des ersten bzw. längenveränderbaren Hebels mit einer Antriebswelle eines Elektromotors gekoppelt oder verbunden sein, sodass eine Rotation ein Verschwenken eines zweiten Hebels und damit der gesamten Klappe hervorruft.

Die Einrichtung kann hier zumindest einen Aktuator und/oder mindestens einen Elektromotor zum Verschwenken mindestens eines Hebels aufweisen. Das Ende mindestens eines Hebels ist dabei direkt oder indirekt, bspw. über das Zahnrad oder Antriebsritzel, mit dem Elektromotor oder dem Aktuator verbunden.

In weiteren alternativen Ausführungen können eine Antriebswelle oder ein Antriebszapfen einen definierten Querschnitt aufweisen, der in einem Endabschnitt des mindestens einen Hebels aufgenommen ist, wobei der Endabschnitt einen korrespondierenden Querschnitt aufweist. In noch weiteren Ausführungen kann der Aktuator beispielweise in einem Abschnitt des mindestens einen Hebels angreifen, der beabstandet zur Schwenkachse des Hebels ist.

In noch weiteren Ausführungen kann ein automatisches Verbringen der Klappe in die Dachstellung über einen separaten Antrieb erfolgen, wobei die Verlagerung des ersten Hebels radial zur Schwenkachse ebenfalls motorisch erfolgt. Hierzu kann ein Antriebsritzel, das drehbar in der Lagereinrichtung angeordnet ist, separat angetrieben werden.

Es können daher in alternativen Ausführungen auch zwei separate Antriebe vorgesehen sein, die das Verschwenken zum Freigeben der Öffnung über die Klappe und das Verschwenken der Klappe zum Erreichen der Dachstellung bereitstellen. In weiteren Ausführungen kann das Verschwenken in die Dachstellung, ggf. mit einer radialen Verlagerung eines Hebels, erst dann erfolgen, wenn ein Ladestecker in die Ladesteckdose eingesetzt wurde. Das Einsetzen kann dann als Befehl zum Verbringen in die Dachstellung dienen. Alternativ kann der Beginn des Ladevorgangs das Verbringen in die Dachstellung auslösen. In diesen Varianten kann auch ein manuelles Öffnen und Verbringen in die Dachstellung und umgekehrt erfolgen.

Darüber hinaus können die Tank- und/oder Lademulde und/oder die Klappe beleuchtbar sein. Insbesondere bei einem elektrischen Laden kann die Beleuchtung eine Rückmeldung über den Ladezustand einer Fahrzeugbatterie und den Ladevorgang liefern. Zudem kann eine Beleuchtung die Ladestelle an einem Fahrzeug kennzeichnen. Bspw. kann eine umlaufende Beleuchtung an der Klappe vorgesehen sein, welche die Klappe in der geschlossenen Stellung umgibt.

Die Klappe kann in weiteren Ausführungsformen an der Innenseite mindestens einen Verschluss für einen Tankstutzen, einen Verschluss für eine Energieversorgungsleitung und/oder einen Verschluss für eine weitere Versorgungsleitung aufweisen. Wenn die Klappe zusätzlich als Verschluss für die verschiedenen Systeme dient, sind keine separaten Verschlüsse erforderlich. Es kann daher kein Verlust von Verschlüssen auftreten. Darüber hinaus kann bei einer Öffnungsbewegung sowohl ein Öffnen der Klappe als auch ein Öffnen bzw. Freigeben der verschiedenen Anschlüsse erreicht werden. Darüber hinaus wird beim Verschließen der Klappe automatisch auch ein Tankstutzen oder ein Anschluss verschlossen. Der Verschluss kann direkt an der Rückseite bzw. der dem Fahrzeug zugewandten Innenseite der Klappe angeordnet bzw. ausgebildet sein.

In weiteren Ausführungsformen kann der mindestens eine Verschluss mindestens eine auf der Innenseite der Klappe angeordnete Dichtung aufweisen.

Die Klappe kann verschiedene Verschlüsse für mehrere Antriebsmöglichkeiten aufweisen, wobei Fahrzeuge mit zusätzlichen Antriebsmöglichkeiten oder Fahrzeuge, die sowohl mit konventionellen Kraftstoffen (zum Beispiels Benzin oder Diesel) als auch mit anderen Kraftstoffen (zum Beispiel Erdgas) betrieben werden können, mindestens zwei Kraftstofftanks und/oder einen Kraftstofftank und einen elektrischen Energiespeicher aufweisen. Wenn die Tankstutzen bzw. die Anschlüsse gemeinsam hinter einer Klappe angeordnet sind, muss auch die Klappe entsprechend dimensioniert sein. Relativ groß bauende Klappen laden im geöffneten Zustand entsprechend groß aus, sodass durch die vorstehend beschriebene Einrichtung verhindert wird, dass die Klappe weit absteht und kein großer Hebel für einen Missbrauch zur Verfügung steht.

Eine weitere Energieversorgungsleitung oder Versorgungsleitung allgemein kann einen Einfüllstutzen für Gas aufweisen und/oder eine elektrisch leitende Versorgungsleitung sein. Weiterhin kann eine Fluidleitung eine Leitung für Harnstoff aufweisen. Hybridfahrzeuge können je nach Ausführung entweder rein elektrisch, nur über einen Kraftstoff wie zum Beispiel Benzin oder Diesel, oder gemeinsam über einen elektrischen Antrieb und einen Verbrennungsmotor angetrieben werden. Derartige Fahrzeuge weisen daher sowohl einen konventionellen Tankstutzen als auch eine Ladesteckdose am Fahrzeug auf.

Im Allgemeinen kann die Einrichtung auch einen Notfallöffnungsmechanismus aufweisen, der über einen Seilzug, einen Knopf und/oder einen Hebel auslösbar ist. Beispielsweise kann der Seilzug mit einem Ende an einem verschiebbar geführten Ende eines Hebels oder mit einem Abschnitt eines Hebels verbunden sein, der beabstandet zu seiner Schwenkachse ist. Dieser Mechanismus stellt sicher, dass ein Öffnen auch dann erreicht wird, wenn beispielsweise elektrische Komponenten zum Öffnen und Schließen ausgefallen sind. Der Mechanismus kann weiter auch so ausgebildet sein, dass ein Schließen der Klappe erreicht werden kann. Weiterhin können der Seilzug, der Knopf und/oder der Hebel mit einem Aktuator zum Verschwenken des mindestens einen Hebels verbunden sein.

Weitere Vorteile, Merkmale und Ausgestaltungsmöglichkeiten ergeben sich aus der nachfolgenden Figurenbeschreibung von nicht einschränkend zu verstehenden Ausführungsbeispielen.

### Kurzbeschreibungen der Zeichnungen

In den Zeichnungen zeigt:
- Fig. 1: eine perspektivische Darstellung einer Einrichtung zum Öffnen und Schließen einer Tankklappe;
- Fig. 2: eine weitere perspektivische Darstellung von Komponenten der Einrichtung;
- Fig. 3: eine Seitenansicht der Einrichtung in einer geschlossenen Stellung;
- Fig. 4: eine Seitenansicht der Einrichtung in einer geöffneten Stellung;
- Fig. 5: eine Seitenansicht der Einrichtung in einer Dachstellung;
- Fig. 6: eine weitere Darstellung der Einrichtung in der Dachstellung;
- Fig. 7: eine perspektivische Darstellung einer Lagereinrichtung der Einrichtung von Fig. 1;
- Fig. 8: einen schematischen Bewegungsablauf zum Öffnen der Klappe der Einrichtung von Fig. 1;
- Fig. 9: einen schematischen Bewegungsablauf zum Verbringen der Klappe aus der geöffneten Stellung in die Dachstellung;
- Fig. 10: eine schematische Darstellung einer Einrichtung einer weiteren Ausführungsform; und
- Fig. 11: einen schematischen Bewegungsablauf zum Verbringen der Klappe des Ausführungsbeispiels von Fig. 10 aus der geschlossenen Stellung in die geöffnete Stellung.

In den Zeichnungen mit gleichen Bezugszeichen versehene Elemente entsprechen im Wesentlichen einander, sofern nichts anderes angegeben ist. Darüber hinaus wird darauf verzichtet, Bestandteile zu zeigen und zu beschreiben, welche nicht wesentlich zum Verständnis der hierin offenbarten technischen Lehre sind. Im Weiteren werden nicht für alle bereits eingeführten und dargestellten Elemente die Bezugszeichen wiederholt, sofern die Elemente selbst und deren Funktion bereits beschrieben wurden oder für einen Fachmann bekannt sind.

### Ausführliche Beschreibung von Ausführungsbeispielen

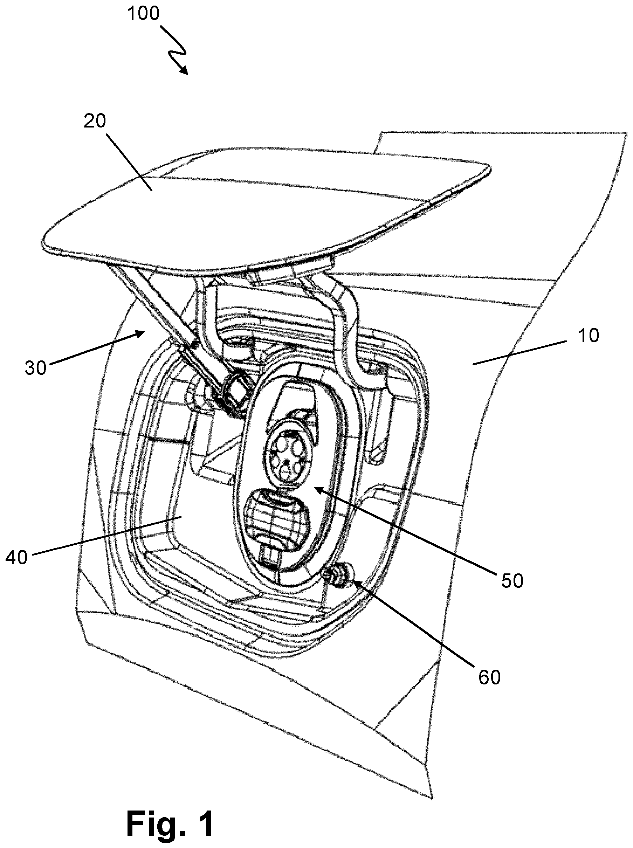

Die Fig. 1 bis 11 zeigen beispielhafte Ausführungsbeispiele für eine Einrichtung 100 zum Öffnen und Schließen einer Klappe 20 in verschiedenen Ansichten. Die gezeigten Ausführungsformen schränken die beschriebene technische Lehre nicht ein. Zudem können einzelne Elemente zur Erfüllung ihrer Funktion anderweitig ausgebildet sein. Auch die Anzahl der einzelnen Komponenten kann in verschiedenen Ausführungsformen vom Dargestellten abweichen.

### Erste Ausführungsform

Fig. 1 zeigt eine perspektivische Darstellung der Einrichtung 100. Die Einrichtung 100 ist an einem Fahrzeug, vorzugsweise einem Elektrofahrzeug, angeordnet und weist eine Lademulde 40 auf, die hinter einer Öffnung der Karosserie 10 eines Fahrzeugs angeordnet ist. Die Lademulde 40 ist über eine Dichtung an der Karosserie 10 angeordnet. Der Muldenkörper der Lademulde 40 kann aus Kunststoff bestehen. Die Dichtungen des Muldenkörpers können in einem Mehrkomponenten-Spritzgussverfahren direkt an dem Muldenkörper angebracht sein. Der Muldenkörper weist zusätzlich eine Öffnung auf, in welcher der Ladestecker 50 aufgenommen ist. Der Ladestecker 50 ist über eine umlaufende Dichtung 52 gegenüber dem Muldenkörper abgedichtet. Der Ladestecker 50 ist exemplarisch dargestellt. In weiteren Ausführungsformen können auch weitere Ladesysteme vorgesehen sein. Darüber hinaus ist es denkbar, die gezeigte Anordnung der Einrichtung 100 auch zum Verschließen von Tanksystemen für herkömmliche Kraftstoffe oder bei Hybridfahrzeugen oder Fahrzeugen mit mehreren verschiedenen oder mehreren gleichen Anschlüssen vorzusehen. So können verschiedenartige Stecker 50 vorgesehen sein, die ein Laden mit verschiedenen Ladesystemen ermöglichen.

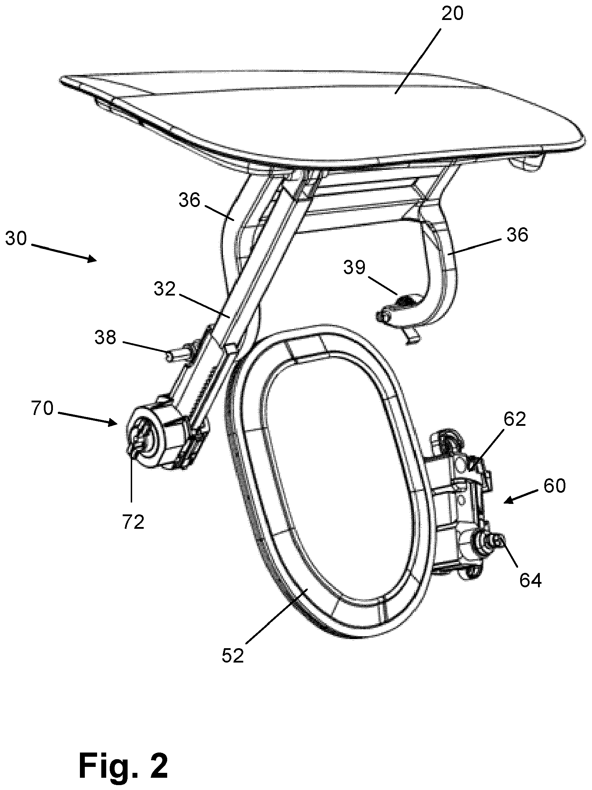

Die Einrichtung 100 umfasst zusätzlich die Klappe 20, die an der Außenseite eine entsprechend der Karosserie 10 ausgebildete Form, Farbe und Oberflächenbeschaffenheit aufweist. Die Klappe 20 kann einen Träger und eine darauf aufgebrachte Oberflächenbeschichtung aufweisen. Die Klappe 20 ist über eine Hebelanordnung 30 verschwenkbar mit dem Muldenkörper der Lademulde 40 verbunden. Die Hebelanordnung 30 umfasst eine Anordnung mit zweiten Hebeln 36 (siehe Fig. 2) und einem ersten Hebel 32.

Fig. 1 zeigt die Lademulde in der Dachstellung, wobei die Klappe 20 sowohl parallel verlagert als auch verschwenkt ist.

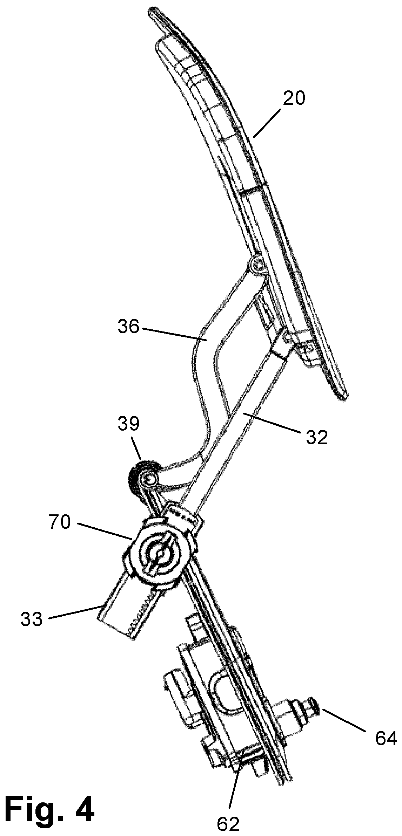

Über eine Verriegelungseinrichtung 60, wie auch in Fig. 2 dargestellt, kann die Klappe 20 in der geschlossenen Stellung arretiert werden, sodass kein Öffnen möglich ist. Die Verriegelungseinrichtung umfasst einen Aktuator 62, der eine Rotation eines Riegels 64 bewirkt. Der Riegel 64 hintergreift einen entsprechenden Vorsprung an der Klappe 20 auf der Innenseite in der verriegelten Stellung. Eine Rotation des Riegels 64 bewirkt dann ein Freigeben der Klappe 20, wobei diese dann unterstützt durch die Kraft einer Spiralfeder 39 automatisch in die geöffnete Stellung (siehe Fig. 4) verbracht wird.

Fig. 2 zeigt eine perspektivische Darstellung von Komponenten der Einrichtung 100 in der Dachstellung. In der Dachstellung ist die Klappe 20 zusätzlich zu ihrer Verlagerung in der Öffnungsstellung um die durch die Anbindungsstelle zwischen den zweiten Armen 36 und der Klappe 20 verlaufenden Achse verschwenkt. Dazu ist der erste Hebel 32 zusätzlich zu seiner verschwenkten Ausrichtung radial zu seiner Schwenkachse verlagert. Die Verlagerung erfolgt bei der hierin gezeigten Ausführungsform durch die Rotation eines Zahnrad 76, dass in einer Lagereinrichtung 70 aufgenommen ist und mit einer Antriebseinheit in Verbindung steht. Das Zahnrad 76 kann beispielsweise mit einem Elektromotor gekoppelt sein, sodass die Rotation des Elektromotors eine Rotation des Zahnrad 76 bewirkt.

In weiteren nicht dargestellten Ausführungsformen kann auch ein manuelles Verschwenken der Klappe 20 aus einer Öffnungsstellung in die Dachstellung erfolgen, wobei beispielsweise bei einer manuellen Betätigung durch ein Anheben der Klappe 20 an deren Unterseite die Klappe 20 verschwenkt wird.

In der gezeigten Ausführungsform stellt die Lagereinrichtung 70 sicher, dass die Dachstellung beibehalten wird. Dies wird über das Zahnrad 76 erreicht, das auch als Dämpfungseinrichtung dient. In der Dachstellung wird über die Kopplung oder direkte Anbindung des Zahnrads 76 an den Elektromotor eine ungewollte Verlagerung verhindert.

Die Lagereinrichtung 70 verhindert durch die Dämpfungseinrichtung damit auch eine unbeabsichtigte Verlagerung oder eine Verlagerung aufgrund des Eigengewichts der Klappe 20.

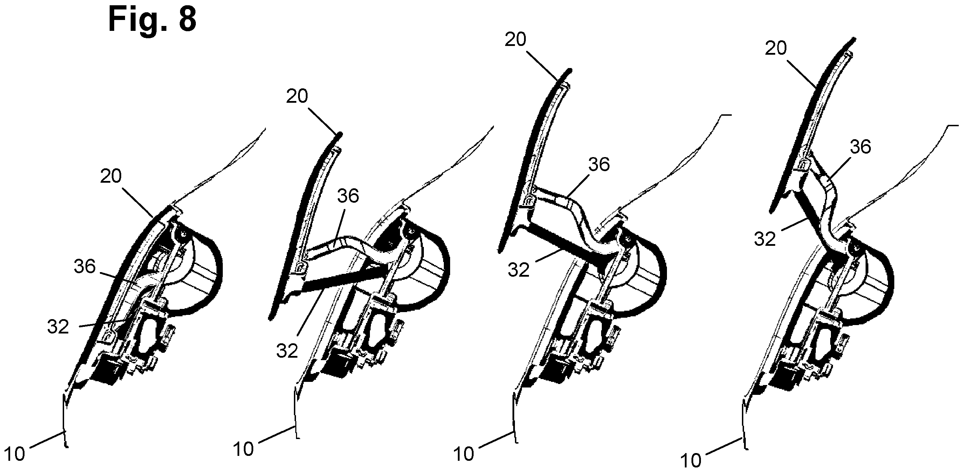

In Fig. 2 ist die Spiralfeder 39 dargestellt, die mit einem fest mit dem zweiten Hebel 36 auf der rechten Seite verbundenen Lagerzapfen 38 verbunden ist und die Verlagerung der Hebelanordnung unterstützt. Der Lagerzapfen 38 weist einen Schlitz auf, in dem ein Ende der Spiralfeder 39 aufgenommen ist. Das andere Ende der Spiralfeder 39, welches in Fig. 2 gezeigt ist, stützt sich an einem entsprechenden Abschnitt des Muldenkörpers der Lademulde 40 oder einem anderen Bestandteil innerhalb des Fahrzeugs ab. Nach dem Freigeben der Klappe 20 unterstützt die Spiralfeder 39 ein Verschwenken der Hebel 36, die miteinander verbunden sind, sodass eine Verlagerung der Klappe 20 nach oben erfolgt (siehe hierzu Fig. 8). Der erste Hebel 32 wird über die Rotation des Zahnrads 76 verschwenkt, wobei eine Rotation des ersten Hebels 20 um die Schwenkachse durch die Lagereinrichtung 70 erfolgt. In weiteren Ausführungsformen können beide Lagerzapfen 38 jeweils mit einer Spiralfeder 39 gekoppelt sein.

Die Lagereinrichtung 70 weist einen Riegel 72 auf. Der Riegel 72 dient zur Lagerung der Lagereinrichtung 70 im Muldenkörper der Lademulde 40. Diese weist eine Öffnung auf, in der ein Abschnitt der Lagereinrichtung 70 drehbar gelagert ist. Von diesem drehbaren Abschnitt aus erstrecken sich abstehende Enden, die zum Einsetzen der Lagereinrichtung 70 dienen. Beim Einsetzen werden die abstehenden Enden des Riegels 72 entsprechend zu den Ausnehmungen der Öffnung im Muldenkörper ausgerichtet und hierüber ein Einsetzen erreicht. Anschließend wird die Lagereinrichtung 70 verdreht, wobei die abstehenden Enden des Riegels 72 an der äußeren Wand der Lademulde anliegen und eine Verlagerung der Lagereinrichtung 70 außerhalb der zweckgemäßen Bestimmung verhindern.

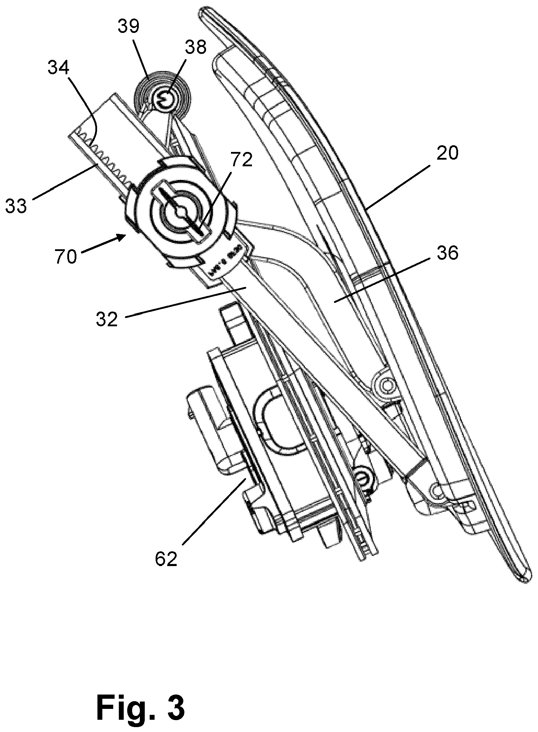

Fig. 3 zeigt die Einrichtung 100 mit einer Klappe 20 in der geschlossenen Stellung. Die Karosserie 10, der Muldenkörper der Lademulde 40 und der Ladestecker 50 sind nicht dargestellt. In der geschlossenen Stellung liegt die Klappe 20 bündig auf einem umlaufenden Lagerabschnitt des Muldenkörpers der Lademulde 40 an. Hierzu können sowohl der Muldenkörper als auch die Klappe 20 jeweils eine umlaufende Dichtung aufweisen, die eine abdichtende Lagerung bereitstellen. Durch die Hebelanordnung 30 wird die Klappe 20 gleichmäßig gegen den Auflagebereich gedrückt.

In der geschlossenen Stellung ist die Klappe 20 über die Verriegelungseinrichtung 60 gehalten, wobei der Riegel 64 (beide in Fig. 3 nicht dargestellt) die Klappe 20 hält.

Der erste Hebel 32 weist einen Abschnitt 33 auf, der wiederum einen Zahnstangenabschnitt 34 mit Zähnen umfasst. Der Abschnitt 33 befindet sich in der geschlossenen Stellung der Klappe 20 teilweise innerhalb der Lagereinrichtung 70. Zudem steht der Abschnitt 33 aus der Lagereinrichtung 70 an dem dem ersten Hebel 32 im Verbindungsbereich mit der Klappe 20 gegenüberliegenden Ende hervor.

Fig. 4 zeigt den Zustand der Einrichtung 100 mit der in die Öffnungsstellung verbrachten Klappe 20. Vor dem Verbringen in die geöffnete Stellung erfolgt ein Freigeben der Klappe 20 durch eine Rotation eines Stiftes der mit dem Riegel 64 verbunden ist, wodurch die Verriegelung der Klappe 20 aufgehoben wird. Das Zahnrad 76 in der Lagereinrichtung 70 wird verdreht und bewirkt eine Rotation des Hebels 32 um die Drehachse des Zahnrads 76. Die in der Spiralfeder 39 gespeicherte Energie entlädt sich nun und bewirkt eine Rotation des Hebels 36, was zu einem Verschwenken der zweiten Hebel 36 gegen den Uhrzeigersinn (siehe Fig. 4) führt.

Zudem erfolgt ein Verschwenken des ersten Hebels 32, der über die Lagereinrichtung 70 drehbar am Muldenkörper der Lademulde 40 gelagert ist. Der Abschnitt 33 befindet sich immer noch in der Position, die er in der geschlossenen Stellung der Klappe 20 hat.

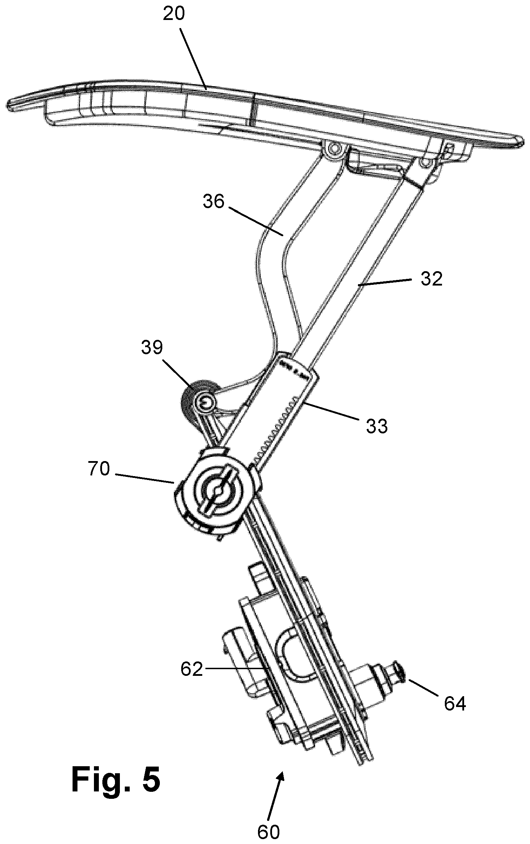

Fig. 5 zeigt den Zustand der Klappe 20 in der sogenannten "Dach"-Stellung. Hierbei sind die Position und die Ausrichtung der zweiten Hebel 36 nicht verändert worden. Lediglich der erste Hebel 32 ist radial zur Schwenkachse durch die Lagereinrichtung 70 verlagert worden.

Die Verlagerung kann in weiteren Ausführungen bei einer manuellen Bedienung der Klappe 20 beispielsweise durch ein Anheben der Klappe 20 am unteren Rand erfolgen. Dabei wird der erste Hebel 32 aus der Lagereinrichtung 70 herausgezogen. Damit die Verlagerung nicht selbstständig erfolgt oder die ausgewählte Stellung wieder verlässt, kann ein Zahnrad, wie das Zahnrad 76 als Dämpfungseinrichtung in der Lagereinrichtung 70 vorgesehen sein. Bspw. kann das Zahnrad 76 in solchen Ausführungen fest mit der Lagereinrichtung 70 verbunden sein und nur gemeinsam mit der Lagereinrichtung 70 rotiert werden. Die Dämpfungseinrichtung wirkt mit den Zähnen des Zahnstangenabschnitts 34 zusammen.

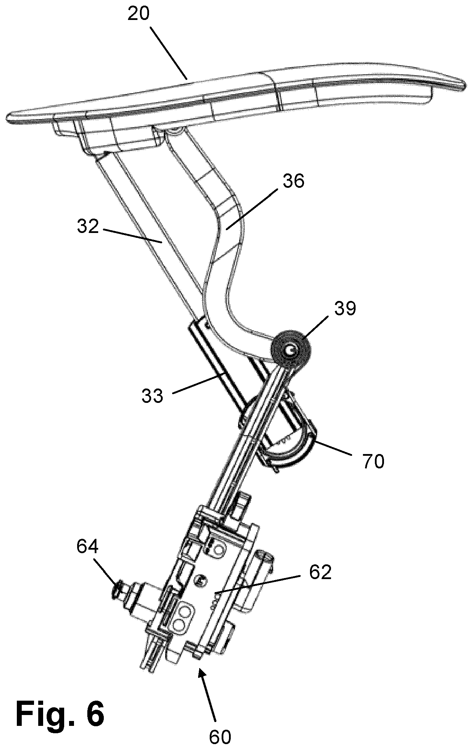

Fig. 6 zeigt noch eine weitere schematische Seitenansicht der Einrichtung 100 mit einer Klappe 20 in der Dachstellung.

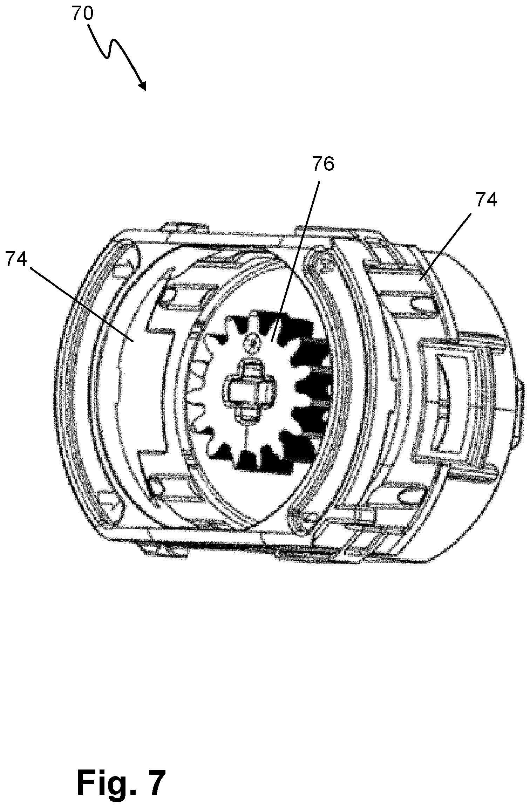

Fig. 7 zeigt eine perspektivische Darstellung der Lagereinrichtung 70. Die Lagereinrichtung 70 weist einen nicht dargestellten Lagerabschnitt auf, über den die gesamte Lagereinrichtung 70 in einer entsprechenden Öffnung im Muldenkörper aufgenommen ist. Die Lagereinrichtung 70 kann daher nur um eine Achse verdreht werden. Diese Lagerachse verläuft konzentrisch zur Rotationsachse eines Zahnrads 76, das Bestandteil der Lagereinrichtung 70 ist.

Die Lagereinrichtung 70 weist gegenüberliegende Schlitze 74 auf, durch welche der Abschnitt 33 des ersten Hebels 32 linear führbar gelagert ist. Die Zähne des Zahnstangenabschnitts 34 stehen mit den Zähnen des Zahnrads 76 in Eingriff. Das Zahnrad 76 dient in den verschiedenen Ausführungsformen entweder nur als Dämpfungselement oder als Antriebselement eines Antriebs wie eines Elektromotors. In einer Ausführungsform als Dämpfungselement kann das Zahnrad 76 beispielsweise aus Silikon oder TPE (Thermoplastisches Elastomer) bestehen. Die Zähne des Zahnrads 76 können daher bei einem entsprechenden Druck verformt werden. Eine Verlagerung des ersten Hebels 32 ist deshalb nur dann möglich, wenn eine entsprechende Mindestkraft zum Verlagern des Hebels 32 aufgebracht wird.

In alternativen Ausführungsformen ist das Zahnrad 76 auf einer Welle drehbar gelagert, die durch die Lagereinrichtung 70 verläuft, wobei die Lagereinrichtung 70 zusätzlich frei drehbar um diese Welle gelagert sein kann. Die Welle selbst ist außerhalb des Muldenkörpers dann mit einer weiteren Dämpfungseinrichtung verbunden, die eine Rotation des Zahnrads 76, das in dieser Ausführung aus einem festen Material bestehen kann und daher nicht verformbar ist, entgegenwirkt.

Das Zahnrad 76 kann aber auch zum automatischen Verlagern des ersten Hebels 32 dienen, wobei die Lagerwelle des Zahnrads 76 mit einem Aktuator oder einem Elektromotor gekoppelt ist. Hierüber kann eine Rotation des Zahnrads 76 erfolgen, das aufgrund des in-Eingriff-stehens mit den Zähnen des Zahnstangenabschnitts 34 eine Verlagerung des ersten Hebels 32 radial zur Schwenkachse durch die Lagereinrichtung 70 und den ersten Hebel 32 bewirkt. Das automatische Öffnen kann bspw. erfolgen, wenn ein entsprechendes Signal von einer Sensoreinrichtung geliefert wird. Die Sensoreinrichtung kann bspw. eine Geste oder eine Berührung erfassen, die zum Öffnen der Klappe 20 dient. Ebenso kann durch eine weitere Geste oder Berührung ein Schließen der Klappe 20 erfolgen. Die entsprechenden Gesten können z. B. Wischbewegungen einer Hand sein.

In weiteren Ausführungen kann über zwei separate Servomotoren ein Öffnen und ein Verbringen in die Dachposition erreicht werden. Die Servomotoren sind dabei für jeweils einen Bewegungsablauf zuständig. Das Verbringen in die Dachstellung kann entweder erst dann erfolgen, wenn zuerst die Klappe 20 in die geöffnete Stellung verbracht wurde oder die Klappe 20 einen gewissen Abstand zum Muldenkörper erreicht hat. Ebenso kann das Verbringen der Klappe 20 in die geschlossene Stellung erst dann erfolgen, wenn zuvor die Klappe 20 vollständig und/oder rechtzeitig aus der Dachstellung verbracht wurde.

In weiteren Ausführungen wird die Dachstellung durch einen separaten Servomotor erst dann eingenommen, wenn ein Ladestecker eingesetzt wurde. Nach einem Ladevorgang und dem Abziehen des Ladesteckers wird dann die Dachstellung wieder verlassen. Das Schließen der Klappe 20 kann dann über einen gesonderten Befehl, genauso wie das Öffnen der Klappe 20, erfolgen.

Fig. 8 zeigt schematisch den Bewegungsablauf beim Verbringen der Klappe 20 aus der geschlossenen Stellung (linke Seite) in die geöffnete Stellung (rechte Seite). Die Darstellung auf der linken Seite entspricht dabei im Wesentlichen der Darstellung von Fig. 3 und die Darstellung auf der rechten Seite entspricht im Wesentlichen der Darstellung von Fig. 4.

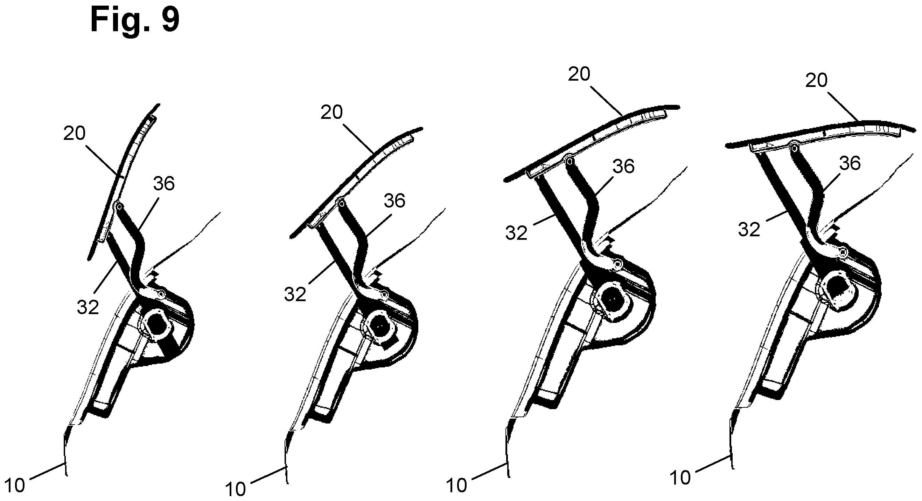

Fig. 9 zeigt den Bewegungsablauf zum Verbringen der Klappe 20 aus der geöffneten Stellung in die sogenannte Dachstellung. Die Darstellung auf der linken Seite entspricht im Wesentlichen der Darstellung von Fig. 4 und die Darstellung auf der rechten Seite entspricht im Wesentlichen der Darstellung der Fig. 1, 2, 5 und 6.

Das Verschwenken der Klappe 20 und das Verbringen aus der geschlossenen Stellung in die geöffnete Stellung erfolgt über eine Verlagerung des ersten Hebels 32 und über die Spiralfeder 39 nach dem Freigeben der Klappe 20 über die Verriegelungseinrichtung 60. Anstelle der Verriegelungseinrichtung 60 kann auch ein Push-Push-Mechanismus vorgesehen sein, wobei ein Drücken auf die Klappe 20 in der geschlossenen Stellung ein Freigeben dieser bewirkt.

Nach dem Verbringen der Klappe 20 in die geöffnete Stellung wird diese zusätzlich um die Achse verschwenkt, welche die Verbindungsachse zwischen der Klappe 20 und den zweiten Armen 36 bildet. Dies erfolgt automatisch über die Lagereinrichtung 70.

In weiteren Ausführungen kann beispielsweise ein Druck auf die obere Kante der Klappe 20 aufgebracht oder die Klappe 20 an der unteren Kante nach oben gezogen werden. Dabei erfolgt eine Verlagerung des ersten Hebels 32 in radialer Richtung zur Schwenkachse durch die Lagereinrichtung 70. Die Dämpfungseinrichtung, gebildet durch das Zahnrad 76, erschwert dabei die Verlagerung und erzeugt eine Bedienkraft. Entsprechend der erforderlichen Bedienkraft müssen daher die Komponenten aufeinander abgestimmt werden. In der sogenannten Dachstellung kann die Klappe 20 soweit verschwenkt werden, bis die obere Kante der Klappe 20 an der Außenseite der Karosserie 10 anliegt.

Vorzugsweise weist daher die Klappe 20 eine umlaufende Dichtung auf, sodass die Karosserie durch die Klappe 20 selbst nicht beschädigt wird und nur in Kontakt mit der Dichtung steht. Insbesondere kann darüber eine dichtende Anlage erreicht werden, wobei Regen, Schnee, Hagel oder dergleichen nicht in den Ladebereich gelangt und seitlich an der Karosserie neben der Ladeöffnung vorbeifließt.

Zur Bereitstellung eines Notfallöffnungsmechanismus kann der Riegel 64 eine Sollbruchstelle aufweisen, sodass nach dem Aufbringen eines Mindestdrucks dieser abgeknickt wird oder bricht, wodurch die Klappe 20 automatisch in die geöffnete Stellung verbracht wird. Ein solcher Notfallöffnungsmechanismus kann auch bei einer elektrisch ansteuerbaren Variante vorgesehen sein.

### Zweite Ausführungsform

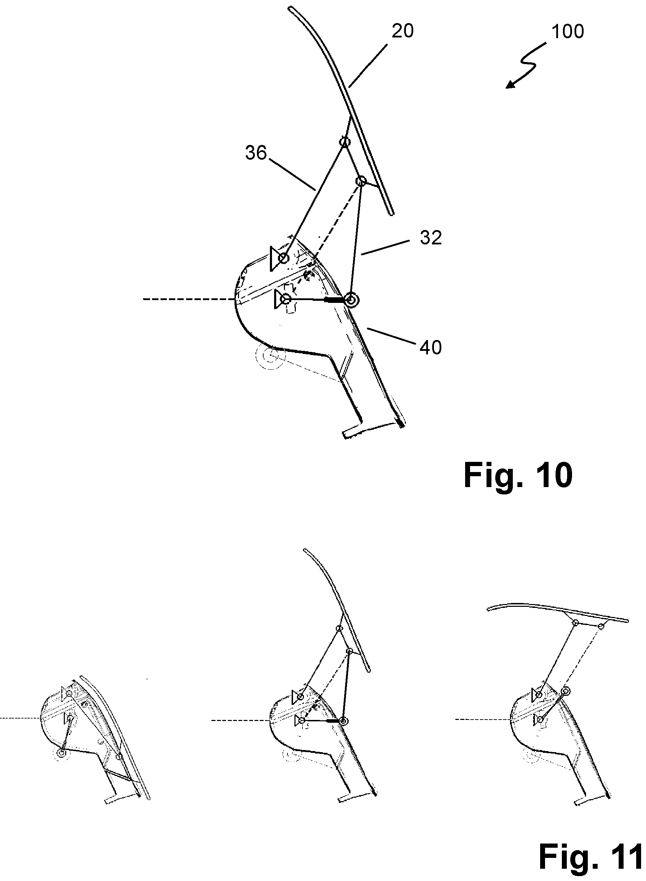

Die Fig. 10 und 11 zeigen eine Einrichtung 100 einer weiteren Ausführungsform, wobei der Hebel 32 geteilt ausgebildet ist. In dieser Ausführung weist der Antrieb eine drehbar gelagerte Kurbel auf, an der ein erster Teil 32 des Hebels 32 angeordnet ist. Der erste Teil des Hebels 32 ist relativ zur drehbaren Kurbel nicht verschwenkbar. Der erste Teil des Hebels 32 ist ferner über ein Gesperre mit einem zweiten Teil des Hebels 32 verbunden. Das andere Ende des zweiten Teils ist verschwenkbar mit der Klappe 20 verbunden. Der zweite Hebel 36 dient zum Ausführen der Schwenkbewegung.

In der geschlossenen Stellung sind die Kurbel und der zweite Teil zueinander blockiert, so dass kein Verschwenken des ersten Teils oder des Hebels 32 erfolgen kann. Zum Verbringen der Klappe 20 in die geöffnete Stellung wird die Kurbel verdreht, wobei der erste Hebel 32 eine entsprechende Bewegung ausführt. Dabei wird unter Zuhilfenahme des Hebels 36 die Klappe 20 verschwenkt, wie in Fig. 11 schematisch gezeigt. In der geöffneten Stellung gibt dann das Gesperre den zweiten Teil des Hebels 32 insoweit frei, dass bei einem weiteren Verdrehen der Kurbel, die bspw. mit einem Elektromotor oder einer Feder gekoppelt ist, ein Verschwenken der beiden Teile des Hebels 32 erfolgt. Der Hebel 32 vergrößert dabei den Abstand zwischen dem Drehpunkt der Kurbel und der Anbindung des Hebels 32 an der Klappe 20. Da der Hebel 36 keinen Längenausgleich bereitstellen kann und zusätzlich an einem Anschlag anliegt, wird die Klappe 20 um die Anbindungsstelle zwischen Klappe 20 und zweiten Teil des Hebels 32 verschwenkt. Dabei wird die Dachstellung erreicht.

Fig. 11 zeigt schematisch den Bewegungsablauf zum Verbringen der Klappe 20 des Ausführungsbeispiels von Fig. 10 aus der geschlossenen Stellung in die geöffnete Stellung, wobei ein Aufrichten der Klappe 20 nach dem Erreichen der geöffneten Stellung bei einem weiteren Verdrehen der Kurbel erfolgt.

### Bezugszeichenliste

- 10: Karosserie
- 20: Klappe
- 30: Hebelanordnung
- 32: erster Hebel
- 33: Abschnitt
- 34: Zahnstangenabschnitt
- 36: zweiter Hebel
- 38: Lagerzapfen
- 39: Spiralfeder
- 40: Lademulde
- 50: Ladestecker
- 52: Dichtung
- 60: Verriegelungseinrichtung
- 62: Aktuator
- 64: Riegel
- 70: Lagereinrichtung
- 72: Riegel
- 74: Schlitz
- 76: Zahnrad
- 100: Einrichtung

## Patentansprüche

1. Einrichtung zum Öffnen und Schließen einer Tank- und/oder Ladeklappe, mindestens aufweisend eine Klappe (20) und eine Hebelanordnung (30), wobei
- die Hebelanordnung (30) mindestens zwei Hebel (32, 36) aufweist, **dadurch gekennzeichnet, dass**
- die Hebel (32, 36) seitlich an der Klappe (20) und an einer Tank- und/oder Lademulde in Öffnungsrichtung übereinander verschwenkbar angeordnet sind,
- einer der Hebel (32) zusätzlich zur verschwenkbaren Lagerung radial zur Schwenkachse verlagerbar ist, um die Klappe (20) in eine Dachstellung zu verbringen, wobei die Klappe (20) sowohl parallel verlagert als auch verschwenkt ist,
- der eine Hebel (32) über eine Lagereinrichtung (70) verschwenkbar an der Tank- und/oder Lademulde gelagert und die Lagereinrichtung (70) verschwenkbar an der Tank- und/oder Lademulde gelagert ist,
- die Lagereinrichtung (70) eine Führung für einen Abschnitt (33) des einen Hebels (32) aufweist, und
- zum Verbringen in die Dachstellung nur der eine Hebel (32) in seiner Länge veränderbar ist.

2. Einrichtung nach Anspruch 1, wobei der Abschnitt (33) des Hebels (32) einen Zahnstangenabschnitt (34) aufweist.

3. Einrichtung nach Anspruch 1 oder 2, aufweisend eine Dämpfungseinrichtung.

4. Einrichtung nach einem der Ansprüche 1 bis 3, wobei die Lagereinrichtung (70) mit einer Antriebseinheit gekoppelt ist.

5. Einrichtung nach Anspruch 4, wobei die Lagereinrichtung (70) eine Führung für einen Abschnitt (33) des einen Hebels (32) und ein Antriebsritzel aufweist, das mit einem Zahnstangenabschnitt (34) des einen Hebels (32) in Eingriff steht und mit der Antriebseinheit gekoppelt ist.

6. Einrichtung nach einem der Ansprüche 1 bis 5, wobei mindestens einer der Hebel (36) über eine Federeinrichtung und/oder über einen elektrisch ansteuerbaren Antrieb verschwenkbar ist.

7. Einrichtung nach Anspruch 6, aufweisend mindestens einen Aktuator und/oder mindestens einen Elektromotor zum Verschwenken mindestens eines Hebels (32; 36).

8. Einrichtung nach einem der Ansprüche 1 bis 7, wobei die Klappe (20) an der Innenseite mindestens einen Verschluss für einen Tankstutzen, einen Verschluss für eine Energieversorgungsleitung und/oder einen Verschluss für eine weitere Versorgungsleitung aufweist.

9. Einrichtung nach Anspruch 8, wobei der mindestens eine Verschluss mindestens eine an der Klappe (20) angeordnete Dichtung aufweist.

## Claims

1. Device for opening and closing a tank flap and/or charging flap, comprising at least a flap (20) and a lever arrangement (30), wherein
- the lever arrangement (30) comprises at least two levers (32, 36),
**characterised in that**
- the levers (32, 36) are arranged laterally at the flap (20) and at a tank trough and/or charging trough to be pivotable one above the other in opening direction,
- one of the levers (32) is in addition to the pivotable mounting displaceable radially with respect to the pivot axis so as to bring the flap (20) into a roof setting, wherein the flap (20) is not only displaced parallelly, but also pivoted,
- the one lever (32) is pivotably mounted at the tank trough and/or charging trough by way of a bearing device (70) and the bearing device (70) is pivotably mounted at the tank trough and/or charging trough,
- the bearing device (70) comprises a guide for a section (33) of the one lever (32) and
- only the one lever (32) is variable in its length for bringing into the roof setting.

2. Device according to claim 1, wherein the section (33) of the lever (32) comprises a rack section (34).

3. Device according to claim 1 or 2, comprising a damping device.

4. Device according to any one of claims 1 to 3, wherein the bearing device (70) is coupled with a drive unit.

5. Device according to claim 4, wherein the bearing unit (70) comprises a guide for a section (33) of the one lever (32) and a drive pinion which is disposed in engagement with a rack section (34) of the one lever (32) and is coupled with the drive unit.

6. Device according to any one of claims 1 to 5, wherein at least one of the levers (36) is pivotable by way of a spring device and/or by way of an electrically activatable drive.

7. Device according to claim 6, comprising at least one actuator and/or at least one electric motor for pivotation of at least one lever (32; 36).

8. Device according to any one of claims 1 to 7, wherein the flap (20) has at the inner side at least one closure for a tank stub pipe, a closure for an energy supply line and/or a closure for a further supply line.

9. Device according to claim 8, wherein the at least one closure has at least one seal arranged at the flap (20).

## Revendications

1. Dispositif pour ouvrir et pour fermer une trappe de carburant et/ou de prise de charge, comprenant au moins une trappe (20) et un ensemble de leviers (30), où
- l'ensemble de leviers (30) présente au moins deux leviers (32, 36), **caractérisé en ce que**
- les leviers (32, 36) sont disposés latéralement sur la trappe (20) et sur une entrée de réservoir de carburant et/ou de prise de charge, de manière à pouvoir pivoter l'un au-dessus de l'autre dans le sens d'ouverture,
- l'un des leviers (32) peut être déplacé radialement par rapport à l'axe de pivotement, en plus du montage pivotant, pour amener la trappe (20) dans une position de toit, la trappe (20) suivant un mouvement de déplacement parallèle et rotatif,
- l'un des leviers (32) est monté de manière pivotante sur l'entrée de réservoir de carburant et/ou de prise de charge par l'intermédiaire d'un dispositif de palier (70) et le dispositif de palier (70) est monté de manière pivotante sur l'entrée de réservoir de carburant et/ou de prise de charge,
- le dispositif de palier (70) présente un guide pour une section (33) de l'un des leviers (32), et
- **en ce que** la longueur de l'un des leviers (32) peut être modifiée pour le mettre en position de toit.

2. Dispositif selon la revendication 1, dans lequel la partie (33) du levier (32) comprend une partie de crémaillère (34).

3. Dispositif selon la revendication 1 ou 2, comprenant un dispositif d'amortissement.

4. Dispositif selon l'une des revendications 1 à 3, dans lequel le dispositif de palier (70) est couplé à une unité d'entraînement.

5. Dispositif selon la revendication 4, où le dispositif de palier (70) comprend un guide pour une partie (33) d'un levier (32) et un pignon d'entraînement qui est en prise avec une partie de crémaillère (34) d'un levier (32) et qui est couplé à l'unité d'entraînement.

6. Dispositif selon l'une des revendications 1 à 5, où au moins l'un des leviers (36) peut être pivoté par un dispositif à ressort et/ou par un entraînement à commande électrique.

7. Dispositif selon la revendication 6, présentant au moins un actionneur et/ou au moins un moteur électrique permettant de faire pivoter au moins un levier (32 ; 36).

8. Dispositif selon l'une des revendications 1 à 7, où la trappe (20) comporte sur sa face interne au moins un obturateur pour une tubulure de réservoir, un obturateur pour une ligne d'alimentation électrique et/ou un obturateur pour une autre ligne d'alimentation.

9. Dispositif selon la revendication 8, où au moins un obturateur comprend au moins un joint d'étanchéité disposé sur la trappe (20) .
